# FASCICULE DE BREVET EUROPEEN

(11) **EP 1 254 832 B1**
(45) Date de publication et mention de la délivrance du brevet: **15.12.2004**
(21) Numéro de dépôt: 02291064.0
(22) Date de dépôt: 26.04.2002
(51) Int. Cl.: B64D 11/06, B60N 2/02

(54) **Siege notamment pour avion comprenant une assise reglable et un dossier**
Sitz insbesondere für Flugzeuge bestehend aus einem verstellbaren Sitzteil und einer Rückenlehne
Seat particularly for airplane providing an adjustable cushion and a backrest

(30) Priorité: 30.04.2001 FR 0105812
(43) Date de publication de la demande: 06.11.2002
(73) Titulaire: Société Industrielle et Commerciale de Matériel Aéronautique, F-36100 Issoudun (FR)
(72) Inventeur: Marais, Joel, 18290 Charost (FR)
(74) Mandataire: Geismar, Thierry

(56) Documents cités:
- EP-A- 0 826 327
- EP-A- 1 074 468
- FR-A- 2 556 294
- FR-A- 2 796 896
- US-A- 4 076 303
- US-A- 4 674 713

## Description

La présente invention concerne un siège notamment pour avion comprenant une structure fixe à laquelle sont fixés une assise réglable et un dossier.

On connaît de nombreux types de sièges d'avion.

La plupart de ces sièges comportent un dossier dont seule l'inclinaison est réglable entre une position normale dite "d'atterrissage - décollage" et une position de repos dans laquelle le dossier est davantage incliné vers l'arrière.

Sur certains sièges, l'inclinaison de l'assise est réglable. Dans d'autres cas, le dossier comporte un appui-tête réglable.

Les sièges les plus sophistiqués, comportent un repose-jambe réglable prolongé par un repose-pied également réglable pour s'adapter à la longueur des jambes du passager.

On sait que la taille des passagers adultes d'un avion varie dans une large fourchette.

Pour tenir compte de ce fait, dans certains sièges, le passager peut régler l'assise en longueur et en hauteur, ainsi que le dossier pour tenir compte de la longueur de ses jambes et de son tronc.

Cependant, étant donné que les différents réglages ne sont pas synchronisés entre eux, les passagers éprouvent des difficultés pour trouver les positions optimales de l'assise et du dossier.

Le but de la présente invention est de remédier à cet inconvénient en créant un siège dont l'assise est réglable d'une manière simple pour pouvoir s'adapter quasi instantanément à la plupart des tailles des passagers.

Suivant l'invention, le siège notamment pour avion comprenant une structure fixe à laquelle sont fixés une assise réglable et un dossier est caractérisé en ce qu'il comprend des premiers moyens pour commander le déplacement de l'assise entre :
- une première position extrême adaptée aux passagers de petite taille prédéterminée ;
- une seconde position extrême adaptée aux passagers de grande taille prédéterminée ;
- les positions intermédiaires entre les deux positions extrêmes étant adaptées à des passagers ayant des tailles intermédiaires, de façon que dans toutes les positions :
   - la distance comprise entre le dossier et le bord avant de l'assise corresponde à la distance comprise entre la base du dos et le creux du genou des passagers en position assise sur le siège, ayant la taille correspondant à l'une desdites positions et, simultanément ;
   - la distance comprise entre le bord avant de l'assise et le sol corresponde à la distance comprise entre le creux du genou et la plante des pieds des passagers ayant la taille correspondant à ladite position.

Selon un mode de réalisation, le dossier dudit siège comporte un support lombaire fixe par rapport audit dossier, et réglable par lesdits premiers moyens de façon simultanée avec l'assise de sorte que, dans toutes les positions, la distance comprise entre l'assise et le centre du support lombaire corresponde à la distance comprise entre les fesses et le centre de la région lombaire des passagers ayant la taille correspondant à ladite position.

Selon un autre mode de réalisation, le réglage du support lombaire est indépendant du réglage de l'assise.

De préférence, lesdites positions extrêmes sont déterminées pour que celles-ci ainsi que les positions intermédiaires soient adaptées à environ 95 % des tailles des passagers.

Selon une version préférée de l'invention, le siège comprend en outre des seconds moyens pour commander simultanément le déplacement du dossier et de l'assise entre une première position dite de "décollage et d'atterrissage" dans laquelle le dossier est légèrement incliné vers l'arrière et l'assise est légèrement inclinée vers le bas et des positions dites de "repos" dans laquelle le dossier est davantage incliné vers l'arrière et l'assise est davantage inclinée vers le bas.

Selon une version avantageuse de l'invention, lesdits seconds moyens de commande sont indépendants desdits premiers moyens de commande, de sorte que l'actionnement des seconds moyens de commande ne modifie pas le réglage obtenu par l'actionnement des premiers moyens de commande, adapté à la taille des passagers.

D'autres particularités et avantages de l'invention apparaîtront encore dans la description ci-après.

Aux dessins annexés, donnés à titre d'exemples non limitatifs :
- la figure 1 est une vue schématique montrant les deux positions extrêmes et une position intermédiaire du siège selon un premier mode de réalisation, ledit siège étant dans la position "d'atterrissage - décollage" ;
- la figure 2 est une vue analogue à la figure 1, montrant le siège dans d'autres positions dites de "repos" ;
- la figure 3 est un schéma du siège de la figure 1, montrant les différents organes de commande de celui-ci ;
- la figure 4 est une vue schématique montrant les deux positions extrêmes et une position intermédiaire du siège selon un deuxième mode de réalisation, ledit siège étant dans la position « d'atterrissage- décollage ».
- la figure 5 est un schéma du siège de la figure 4, montrant les différents organes de commande de celui-ci.

Le siège d'avion comprend une structure fixe 1 comportant un élément en forme de crosse 2 et un élément 3 appelé pied qui se croisent en un point 4.

Sur la structure fixe 1 sont fixés un dossier 6 et une assise réglable 7.

Conformément à l'invention, le siège comprend des premiers moyens pour commander le déplacement de l'assise 7 entre :
- une première position extrême A adaptée aux passagers de petite taille prédéterminée ;
- une seconde position extrême B adaptée aux passagers de grande taille prédéterminée ;
- les positions intermédiaires telles que C entre les deux positions extrêmes A, B étant adaptées à des passagers ayant des tailles intermédiaires, de façon que dans toutes les positions :
   - la distance d1, d2, d3 comprise entre le dossier 6 et le bord avant 7a de l'assise 7 corresponde à la distance comprise entre la base du dos et le creux du genou des passagers en position assise sur le siège, ayant la taille correspondant à l'une desdites positions et, simultanément ;
   - la distance a1, a2, a3 comprise entre le bord avant 7a de l'assise 7 et le sol 5 corresponde à la distance comprise entre le creux du genou et la plante du pied des passagers ayant la taille correspondant à ladite position.

Les positions extrêmes A, B sont déterminées pour que celles-ci ainsi que les positions intermédiaires telles que C soient adaptées à 95 % des tailles des passagers, soit des tailles comprises entre environ 1, 61 m et 1,88 m.

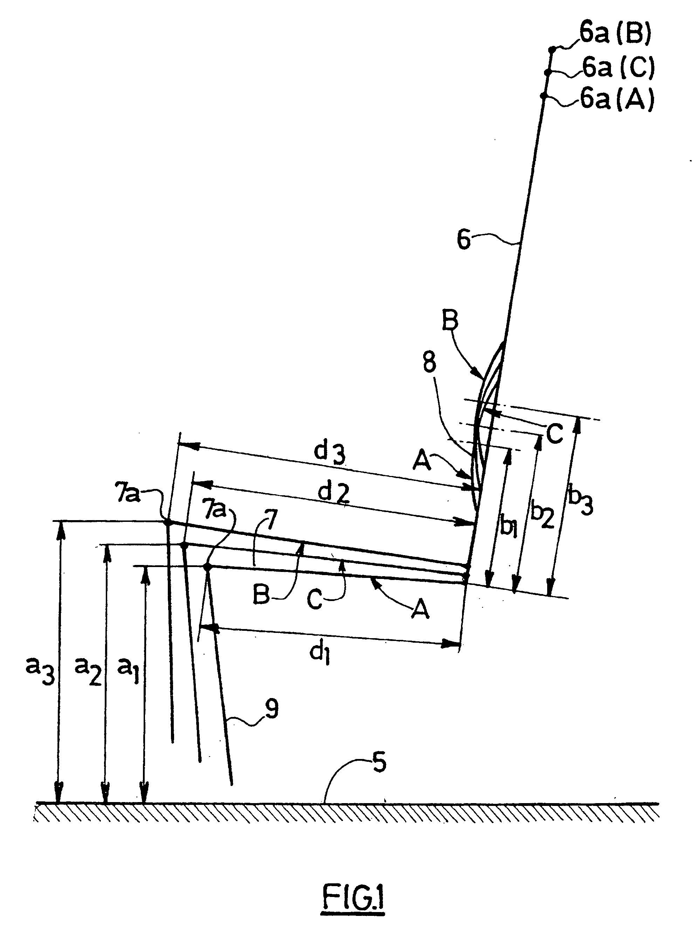

Selon un premier mode de réalisation, représenté sur les figures 1 à 3, le dossier 6 comporte un support lombaire 8 fixe par rapport audit dossier, et réglable par lesdits premiers moyens de façon simultanée avec l'assise de sorte que, dans toutes les positions, la distance (b1, b2, b3) comprise entre l'assise 7 et le centre du support lombaire 8 corresponde à la distance comprise entre les fesses et le centre de la région lombaire des passagers ayant la taille correspondant à ladite position.

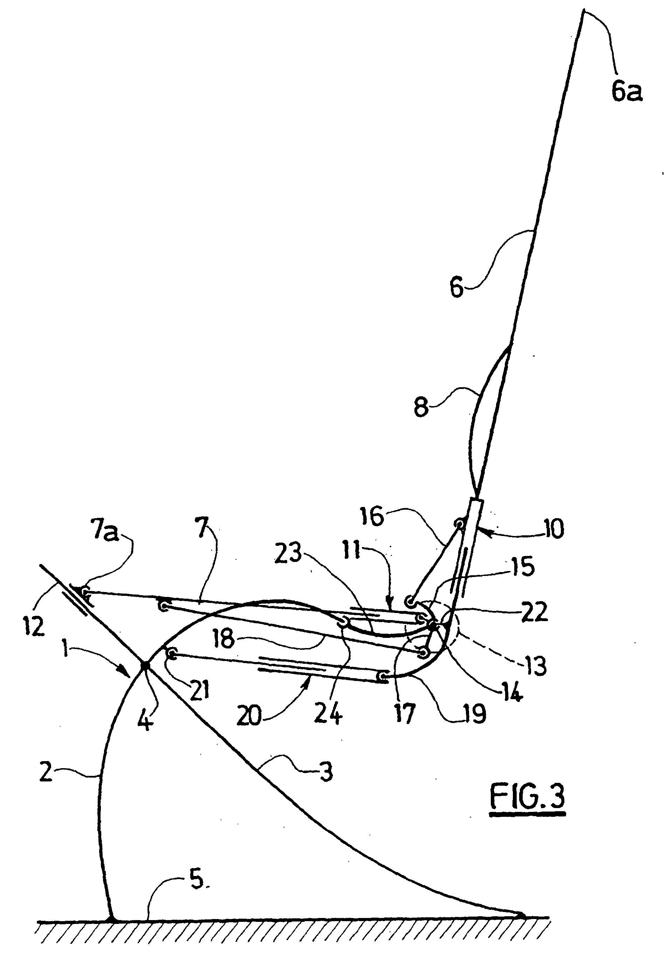

Selon ce premier mode de réalisation, (voir figure 3), le mouvement de translation du dossier 6 et celui de l'assise 7 sont guidés chacun par une glissière 10, 11. Le dossier 6 et l'assise 7 peuvent comporter chacun deux glissières parallèles faisant partie de la structure du dossier et de l'assise.

Le mouvement de soulèvement de l'assise 7 est commandé par deux glissières fixes, telles que celle désignée par 12 adjacentes au bord avant 7a de l'assise et coopérant avec ce bord avant 7a pour soulever légèrement celui-ci lors de la translation vers l'avant de l'assise 7.

Chaque glissière 12 peut-être formée à l'avant de la structure fixe du siège, comme montré par la figure 3, avec une inclinaison d'environ 45°.

Le siège comprend près du bord arrière de l'assise 7 et du bord inférieur du dossier 6, un actionneur 13 dont l'arbre de sortie 14 s'étend transversalement par rapport au siège et porte un bras supérieur 15 relié de façon articulée par une bielle 16 au corps de la glissière 10 de translation du dossier 6 et, un bras inférieur 17 relié de façon articulée par une autre bielle 18 à l'assise 7.

Par ailleurs, la tige de la glissière 10 de translation du dossier 6 est reliée à sa partie inférieure 19 au corps d'un vérin 20 dont la tige est fixée de façon articulée en 21 à la structure du siège. La tige de la glissière 10 est solidaire en outre, d'un bras 22 fixé de façon articulée sur l'axe de sortie 14 de l'actionneur 13, ce bras 22 étant prolongé vers l'avant par une extension 23 reliée de façon articulée en 24 à la structure fixe du siège.

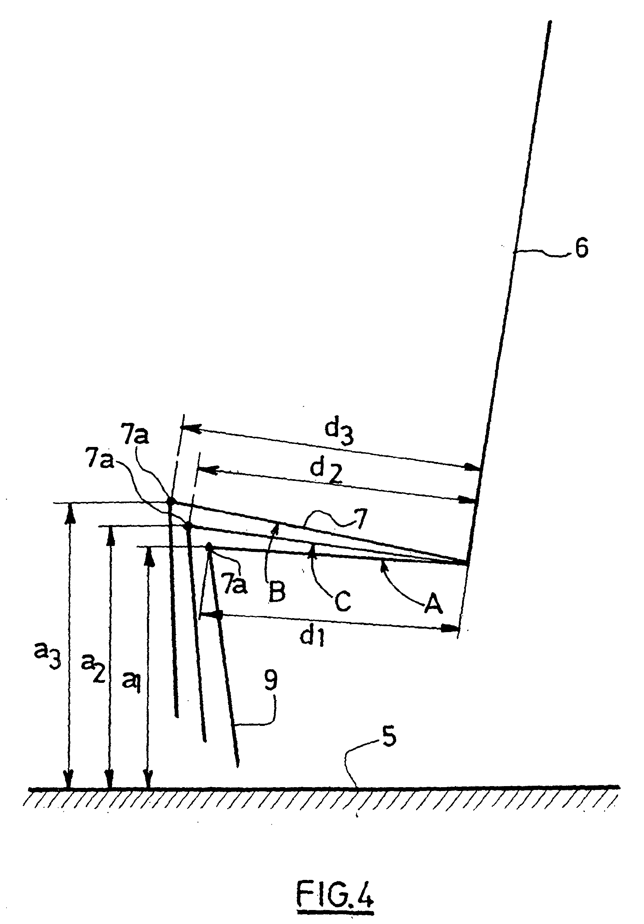

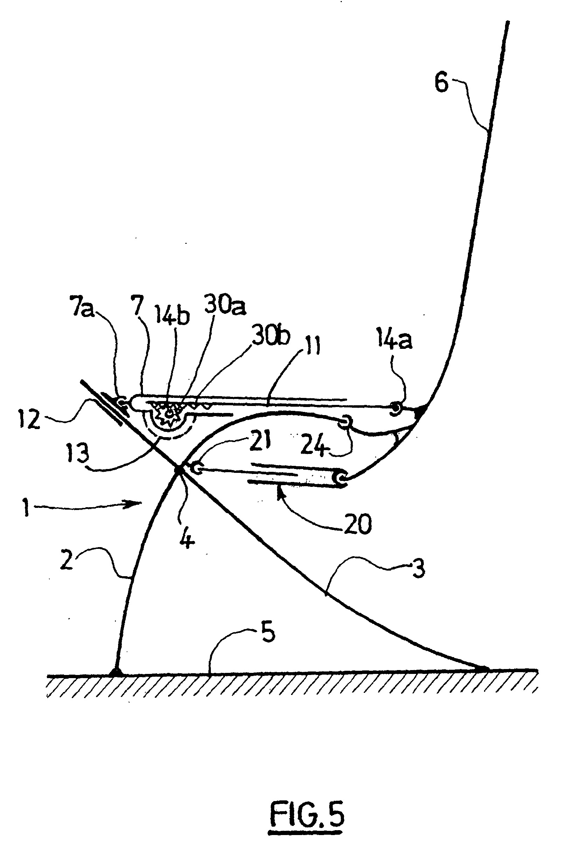

Selon un deuxième mode de réalisation, représenté sur les figures 4 et 5, le dossier 6 du siège ne comprend pas de support lombaire 8. Selon ce mode de réalisation (voir figure 4), seule l'assise est donc réglable par les premiers moyens de commande.

Selon ce deuxième mode de réalisation (voir figure 5), le mouvement de translation de l'assise 7 est guidé par une glissière 11.

Le mouvement de soulèvement de l'assise 7 est commandé par deux glissières fixes, telles que celle désignée par 12 adjacentes au bord avant 7a de l'assise, et coopérant avec ce bord avant 7a pour soulever légèrement celui-ci lors de la translation vers l'avant de l'assise 7.

Selon ce deuxième mode de réalisation, l'assise 7 est télescopique. L'assise 7 a son bord arrière articulé autour d'un axe 14a solidaire du dossier 6, et son bord avant 7a est agencé pour coulisser vers le haut et vers l'avant par rapport à la structure fixe 1.

L'assise 7 comprend un actionneur 13, d'axe 14b, disposé près du bord avant 7a de l'assise 7. Cet actionneur 13 est agencé pour assurer le télescopage de l'assise 7. A cet effet, il comprend un pignon actionneur 30a associé à une crémaillère 30b.

Par ailleurs le dossier 6 est relié au corps d'un vérin 20 dont la tige est fixée de façon articulée en 21 à la structure du siège.

Selon un autre mode de réalisation, non représenté, le dossier comporte un support lombaire 8 fixe par rapport au dossier 6, et réglable indépendamment de l'assise 7.

L'actionneur 13 peut être un moteur électrique, ou un moyen de commande manuelle.

Le siège selon l'invention peut comporter en outre un repose-jambe 9 articulé près du bord avant 7a de l'assise 7, réglable en fonction de la taille des passagers, et dont l'inclinaison peut être réglée de façon manuelle ou motorisée.

De plus, le dossier 6 peut comporter une têtière également réglable de façon manuelle ou de façon motorisée, indépendamment ou non du dossier 6, en fonction de la taille des passagers.

Le siège selon l'invention, comprend en outre des seconds moyens pour commander simultanément le déplacement du dossier 6 et de l'assise 7 entre une première position dite de "décollage et d'atterrissage" dans laquelle le dossier 6 est légèrement incliné vers l'arrière et l'assise est légèrement inclinée vers le bas, et des positions dites de « repos » R1, R2, etc.. dans laquelle le dossier 6 est davantage incliné vers l'arrière et dans laquelle l'assise 7 est davantage inclinée vers le bas.

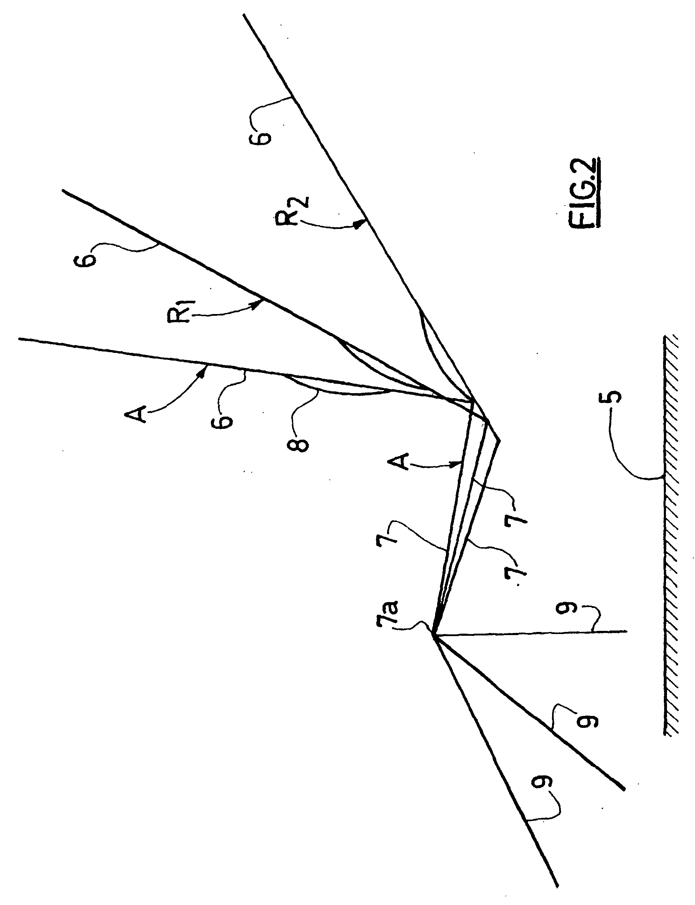

Ces positions sont représentées sur la figure 2, dans laquelle le siège est représenté suivant son premier mode de réalisation.

Les seconds moyens de commande sont indépendants des premiers moyens de commande, de sorte que l'actionnement des seconds moyens de commande ne modifie pas le réglage de la position de l'assise 7 et du dossier 6 (premier mode de réalisation), ou le réglage de l'assise (deuxième mode de réalisation), obtenu par l'actionnement des premiers moyens de commande, adapté à la taille du passager.

Autrement dit, les distances telles que a1, a2, a3 ; b1, b2, b3 ; et d1, d2, d3 obtenues par les premiers moyens de commande ne sont pas modifiées lorsqu'on modifie l'inclinaison de dossier et de l'assise.

On va maintenant expliquer le fonctionnement du siège que l'on vient de décrire, en relation avec le premier mode de réalisation dudit siège représenté sur les figures 1 à 3.

Un passager de taille égale par exemple à 1,75m prend place sur un siège selon l'invention réglé à la position A c'est-à-dire adaptée aux personnes dont la taille n'est que de 1,61m.

Le passager constate alors que le creux de son genou est situé largement au-delà et au-dessus du bord avant 7a de l'assise 7 et que l'appui lombaire 8 est situé trop bas.

Le passager actionne alors l'actionneur 13 qui déplace les glissières 10 et 11.

Le dossier 6 se déplace alors vers le haut et l'assise vers l'avant.

La rotation de l'arbre 14 de l'actionneur 13 provoque le soulèvement de l'arrière de l'assise 7, tandis que l'avant de cette dernière se soulève grâce à la glissière inclinée 12.

Le passager cesse d'actionner les moyens de commande du déplacement du dossier 6 et de l'assise 7, lorsqu'il aura trouvé la position optimale correspondant à sa taille de 1,75m.

Cette position optimale correspond sensiblement à la position intermédiaire C représentée sur la figure 1.

Dans cette position, la plante des pieds du passager prend appui sur le sol 5. Le creux de ses genoux est en appui sans excès sur le bord avant 7a de l'assise 7.

L'appui lombaire 8 occupe la bonne position par rapport à la position des vertèbres lombaires du dos du passager.

A partir de la position "atterrissage décollage" ci-dessus, le passager peut choisir les positions de repos R1, R2 etc... représentées sur la figure 2.

Lors du déplacement du dossier 6 et de l'assise 7 respectivement vers l'arrière et vers le bas, le bord avant 7a ne bouge pas, de sorte que le creux du genou reste dans la position idéale.

Lors de ce déplacement vers une position "repos", l'inclinaison du dossier 6 vers l'arrière et l'inclinaison de l'assise 7 vers le bas est commandée par le vérin 20 de l'arbre.

Le fonctionnement du siège selon le deuxième mode de réalisation est similaire à celui qui vient d'être décrit, à l'exception du réglage de l'appui lombaire 8, qui n'est pas prévu dans ce mode de réalisation.

Bien entendu l'invention n'est pas limitée aux exemples de réalisation que l'on vient de décrire et on peut apporter à ceux-ci de nombreuses modifications sans sortir du cadre de l'invention.

Ainsi, le passager pourrait disposer sur le siège d'un clavier permettant d'afficher sa taille et d'un circuit électronique commandant automatiquement le déplacement du dossier et de l'assise vers la position correspondant à la taille affichée.

A partir de cette position, le passager aurait la possibilité d'affiner les réglages pour trouver la position optimale.

Par ailleurs, le vérin 20 qui commande l'inclinaison du dossier et de l'assise, permettant ainsi le réglage de la position « confort », peut être un moteur linéaire ou un vérin mécanique.

L'invention peut s'appliquer à tout type de sièges autres que les sièges d'avion et en particulier aux sièges d'automobiles.

## Revendications

1. Siège notamment pour avion comprenant une structure fixe (1) à laquelle sont fixés une assise réglable (7) et un dossier (6), **caractérisé en ce qu'**il comprend des premiers moyens pour commander le déplacement de l'assise (7) entre :
- une première position extrême (A) adaptée aux passagers de petite taille prédéterminée ;
- une seconde position extrême (B) adaptée aux passagers de grande taille prédéterminée ;
- les positions intermédiaires (C) entre les deux positions extrêmes (A, B) étant adaptées à des passagers ayant des tailles intermédiaires, de façon que dans toutes les positions :
- la distance (d1, d2, d3) comprise entre le dossier (6) et le bord avant (7a) de l'assise (7) corresponde à la distance comprise entre la base du dos et le creux du genou des passagers en position assise sur le siège, ayant la taille correspondant à l'une desdites positions et, simultanément ;
- la distance (a1, a2, a3) comprise entre le bord avant (7a) de l'assise et le sol (5) corresponde à la distance comprise entre le creux du genou et la plante du pied des passagers ayant la taille correspondant à ladite position.

2. Siège conforme à la revendication 1, **caractérisé en ce que** le dossier (6) comporte un support lombaire (8) fixe par rapport audit dossier (6) et réglable par lesdits premiers moyens de façon simultanée avec l'assise (7) de sorte que, dans toutes les positions, la distance (b1, b2, b3) comprise entre l'assise (7) et le centre du support lombaire (8) corresponde à la distance comprise entre les fesses et le centre de la région lombaire des passagers ayant la taille correspondant à ladite position.

3. Siège conforme à la revendication 2, **caractérisé en ce que** le mouvement de translation du dossier (6) et celui de l'assise (7) sont guidés chacun par une glissière (10, 11).

4. Siège conforme à la revendication 3, **caractérisé en ce qu'**il comprend près du bord arrière de l'assise (7) et du bord inférieur du dossier (6), un actionneur (13) dont l'arbre de sortie (14) s'étend transversalement par rapport au siège et porte un bras supérieur (15) relié de façon articulée par une bielle (16) au corps de la glissière (10) de translation du dossier et, un bras inférieur (17) relié de façon articulée par une autre bielle (18) à l'assise (7).

5. Siège conforme à la revendication 1, **caractérisé en ce que** l'assise (7) est télescopique, a son bord arrière articulé autour d'un axe (14a) solidaire du dossier (6) et son bord avant (7a) agencé pour coulisser vers le haut et vers l'avant par rapport à la structure fixe (1), ladite assise comprenant un actionneur (13) agencé pour assurer le télescopage de l'assise (7).

6. Siège conforme à la revendication 5, **caractérisé en ce que** l'actionneur (13) est disposé près du bord avant (7a) de l'assise (7), et comprend un pignon actionneur (30a) associé à une crémaillère (30b).

7. Siège conforme à la revendication 1 ou 6, **caractérisé en ce que** le dossier (6) comporte un support lombaire (8) fixe par rapport audit dossier (6), et réglable indépendamment dé l'assise (7).

8. Siège conforme à l'une des revendications 3 à 7, **caractérisé en ce que** le mouvement de soulèvement de l'assise (7) est commandé par deux glissières fixes (12) adjacentes au bord avant (7a) de l'assise et coopérant avec ce bord avant pour soulever celui-ci lors de la translation vers l'avant de l'assise (7), avec une inclinaison d'environ 45°.

9. Siège conforme à l'une quelconque des revendications 1 à 8, **caractérisé en ce que** lesdites positions extrêmes (A, B) sont déterminées pour que celles-ci ainsi que les positions intermédiaires soient adaptées à environ 95 % des tailles des passagers.

10. Siège conforme à l'une quelconque des revendications 1 à 9, **caractérisé en ce qu'**il comprend en outre des seconds moyens pour commander simultanément le déplacement du dossier (6) et de l'assise (7) entre une première position dite de "décollage et d'atterrissage" dans laquelle le dossier est légèrement incliné vers l'arrière et l'assise (7) est légèrement inclinée vers le bas, et des positions dites de "repos" (R1, R2,...) dans laquelle le dossier (6) est davantage incliné vers l'arrière et l'assise (7) est davantage inclinée vers le bas.

11. Siège conforme à la revendication 10, **caractérisé en ce que** lesdits seconds moyens de commande sont indépendants desdits premiers moyens de commande, de sorte que l'actionnement des seconds moyens de commande ne modifie pas le réglage obtenu par l'actionnement des premiers moyens de commande, adapté à la taille du passager.

12. Siège conforme à la revendication 11, **caractérisé en ce que** le dossier (6) est relié à sa partie inférieure au corps d'un vérin (20) dont la tige est fixée de façon articulée à la structure (1) du siège.

13. Siège conforme à l'une des revendications 1 à 12, **caractérisé en ce que** les moyens de commande sont manuels ou motorisés.

14. Siège conforme à l'une des revendications 1 à 13, **caractérisé en ce que** le dossier (6) comporte une têtière réglable manuellement ou de façon motorisée, indépendamment ou non du dossier (6), en fonction de la taille des passagers.

15. Siège conforme à l'une des revendications 1 à 14, **caractérisé en ce qu'**il comprend un repose-jambes (9) réglable en fonction de la taille des passagers et dont l'inclinaison peut-être réglée de façon manuelle ou motorisée.

## Patentansprüche

1. Sitz, insbesondere für ein Flugzeug, mit einer festen Struktur (1), an der eine einstellbare Sitzfläche (7) und eine Rückenlehne (6) befestigt sind, **dadurch gekennzeichnet, dass** er erste Mittel umfasst, um das Verschieben der Sitzfläche (7) zu steuern zwischen:
- einer ersten Endposition (A), angepasst an Passagiere von kleiner vorbestimmter Größe;
- einer zweiten Endposition (B), angepasst an Passagiere von großer vorbestimmter Größe;
- wobei die Zwischenpositionen (C) zwischen den beiden Endpositionen (A, B) an Passagiere von mittlerer Größe angepasst sind, so dass in allen Positionen:
- - der Abstand (d1, d2, d3) zwischen der Rückenlehne (6) und der vorderen Kante (7a) der Sitzfläche (7) dem Abstand zwischen der Rückenbasis und der Kniehöhle der auf der Sitzfläche sitzenden Passagiere entspricht, die eine einer der besagten Positionen entsprechende Größe aufweisen, und gleichzeitig;
- - der Abstand (a1, a2, a3) zwischen der vorderen Kante (7a) der Sitzfläche und dem Boden (5) dem Abstand zwischen der Kniehöhle und der Fußwurzel der Passagiere entspricht, die eine der besagten Position entsprechende Größe aufweisen.

2. Sitz nach Anspruch 1, **dadurch gekennzeichnet, dass** die Rückenlehne (6) eine in Bezug auf die besagte Rückenlehne (6) feste Lenenstütze (8) umfasst, die mit den ersten Mitteln gleichzeitig mit der Sitzfläche (7) eingestellt werden kann, so dass der Abstand (b1, b2, b3) zwischen der Sitzfläche (7) und der Mittel der Lenenstütze (8) in allen Positionen dem Abstand zwischen dem Gesäß und der Mitte der Kreuzregion der Passagiere entspricht, die eine der besagten Position entsprechende Größe aufweisen.

3. Sitz nach Anspruch 2, **dadurch gekennzeichnet, dass** die Translationsbewegung der Rückenlehne (6) und die der Sitzfläche (7) jeweils von einer Gleitschiene (10, 11) geführt werden.

4. Sitz nach Anspruch 3, **dadurch gekennzeichnet, dass** er in der Nähe der hinteren Kante der Sitzfläche (7) und der unteren Kante der Rückenlehne (6) einen Betätigungsschalter (13) umfasst, dessen Ausgangswelle (14) sich quer zum Sitz erstreckt und einen oberen Arm (15) trägt, der über eine Stange (16) am Körper der Translationsgleitschiene (10) der Rückenlehne angelenkt ist, sowie einen unteren Arm (17), der über eine andere Stange (18) an die Sitzfläche (7) angelenkt ist.

5. Sitz nach Anspruch 1, **dadurch gekennzeichnet, dass** die Sitzfläche (7) teleskopisch ist, wobei ihre hintere Kante um eine zur Rückenlehne (6) gehörige Achse (14a) angelenkt und ihre vordere Kante (7a) vorgesehen ist, um sich in Bezug auf die feste Struktur (1) nach oben und nach vorne zu verschieben, wobei die besagte Sitzfläche einen Betätigungsschalter (13) umfasst, der vorgesehen ist, um das Ein- und Ausfahren der Sitzfläche (7) zu gewährleisten.

6. Sitz nach Anspruch 5, **dadurch gekennzeichnet, dass** der Betätigungsschalter (13) in der Nähe der vorderen Kante (7a) der Sitzfläche (7) angeordnet ist und ein einer Zahnstange (30b) zugeordnetes Betätigungsritzel (30a) umfasst.

7. Sitz nach Anspruch 1 oder 6, **dadurch gekennzeichnet, dass** die Rückenlehne (6) eine in Bezug auf die besagte Rückenlehne (6) feste und unabhängig von der Sitzfläche (7) einstellbare Lenenstütze (8) umfasst.

8. Sitz nach einem der Ansprüche 3 bis 7, **dadurch gekennzeichnet, dass** die Hubbewegung der Sitzfläche (7) von zwei festen Gleitschienen (12) gesteuert wird, die an die vordere Kante (7a) der Sitzfläche angrenzen und mit dieser vorderen Kante zusammenwirken, um sie bei der Translation nach vorne der Sitzfläche (7) mit einer Schrägstellung von etwa 45° anzuheben.

9. Sitz nach einem der Ansprüche 1 bis 8, **dadurch gekennzeichnet, dass** die besagten Endpositionen (A, B) so bestimmt werden, dass sie sowie die Zwischenpositionen an etwa 95% der Größen der Passagiere angepasst sind.

10. Sitz nach einem der Ansprüche 1 bis 9, **dadurch gekennzeichnet, dass** er ferner zweite Mittel zur gleichzeitigen Steuerung des Verschiebens der Rückenlehne (6) und der Sitzfläche (7) zwischen einer ersten sogenannten "Start- und Landeposition", in der die Rückenlehne leicht nach hinten und die Sitzfläche (7) leicht nach unten geneigt ist, und den sogenannten "Ruhepositionen" (R1, R2, ...), in denen die Rückenlehne (6) etwas weiter nach hinten und die Sitzfläche (7) etwas weiter nach unten geneigt ist, umfasst.

11. Sitz nach Anspruch 10, **dadurch gekennzeichnet, dass** die besagten zweiten Steuermittel von den besagten ersten Steuermitteln unabhängig sind, so dass die Betätigung der zweiten Steuermittel die durch die Betätigung der ersten Steuermittel erhaltene, an die Größe des Passagiers angepasste Einstellung nicht abändert.

12. Sitz nach Anspruch 11, **dadurch gekennzeichnet, dass** die Rückenlehne (6) an ihrem unteren Teil mit dem Körper eines Zylinders (20) verbunden ist, dessen Stange an der Struktur (1) des Sitzes angelenkt ist.

13. Sitz nach einem der Ansprüche 1 bis 12, **dadurch gekennzeichnet, dass** die Steuermittel manuell oder motorisiert sind.

14. Sitz nach einem der Ansprüche 1 bis 13, **dadurch gekennzeichnet, dass** die Rückenlehne (6) eine manuell oder motorisiert, unabhängig oder nicht von der Rückenlehne (6), entsprechend der Größe der Passagiere einstellbare Kopfstütze umfasst.

15. Sitz nach einem der Ansprüche 1 bis 14, **dadurch gekennzeichnet, dass** er eine entsprechend der Größe der Passagiere einstellbare Beinstütze (9) umfasst, deren Schrägstellung manuell oder motorisiert eingestellt werden kann.

## Claims

1. A seat, in particular for an aircraft, comprising a fixed structure (1) to which there are fixed an adjustable squab (7) and a back rest (6), **characterised in that** it comprises first means for controlling the movement of the squab (7) between:
- a first extreme position (A) adapted to passengers of predetermined small size;
- a second extreme position (B) adapted to passengers of predetermined large size;
- the intermediate positions (C) between the two extreme positions (A, B) being adapted to passengers having intermediate sizes, so that, in all positions:
- the distance (d1, d2, d3) between the back rest (6) and the front edge (7a) of the squab (7) corresponds to the distance between the base of the back and the hollow of the knee of the passengers in a seated position on the seat, having the size corresponding to one of the said positions, and, simultaneously;
- the distance (a1, a2, a3) between the front edge (7a) of the squab and the floor (5) corresponds to the distance between the hollow of the knee and the sole of the foot of the passengers having the size corresponding to the said position.

2. A seat according to Claim 1, **characterised in that** the back rest (6) has a lumbar support (8) fixed with respect to the said back rest (6) and adjustable by means of the first means simultaneously with the squab (7) so that, in all positions, the distance (b1, b2, b3) between the squab (7) and the centre of the lumbar support (8) corresponds to the distance between the buttocks and the centre of the lumbar region of the passengers having the size corresponding to the said position.

3. A seat according to Claim 2, **characterised in that** the translation movement of the back rest (6) and that of the squab (7) are each guided by a runner (10, 11).

4. A seat according to Claim 3, **characterised in that** it comprises, close to the rear edge of the squab (7) and the bottom edge of the back rest (6), an actuator (13) whose output shaft (14) extends transversely with respect to the seat and carries a top arm (15) connected in an articulated fashion by a connecting rod (16) to the body of the back rest translation runner (10) and a bottom arm (17) connected in an articulated fashion by another connecting rod (18) to the squab (7).

5. A seat according to Claim 1, **characterised in that** the squab (7) is telescopic, has its rear edge articulated about a shaft (14a) fixed to the back rest (6) and its front edge (7a) arranged so as to slide upwards and forwards with respect to the fixed structure (1), the said squab comprising an actuator (13) arranged so as to provide the telescoping of the squab (7).

6. A seat according to Claim 5, **characterised in that** the actuator (13) is disposed close to the front edge (7a) of the squab (7), and comprises an actuating pinion (30a) associated with a rack (30b).

7. A seat according to Claim 1 or 6, **characterised in that** the back rest (6) has a lumbar support (8) fixed with respect to the said back rest (6), and able to be adjusted independently of the squab (7).

8. A seat according to one of Claims 3 to 7, **characterised in that** the lifting movement of the squab (7) is controlled by two fixed runners (12) adjacent to the front edge (7a) of the squab and cooperating with this front edge in order to raise it during the forward translation of the squab (7), with an inclination of approximately 45°.

9. A seat according to any one of Claims 1 to 8, **characterised in that** the said extreme positions (A, B) are determined so that these and the intermediate positions are adapted to approximately 95% of passenger sizes.

10. A seat according to any one of Claims 1 to 9, **characterised in that** it also comprises second means for simultaneously controlling the movement of the back rest (6) and of the squab (7) between a first so-called "take-off and landing" position in which the back rest is slightly inclined towards the rear and the squab (7) is slightly inclined downwards, and so-called "rest" positions (R1, R2, ...) in which the back rest (6) is more inclined towards the rear and the squab (7) is more inclined downwards.

11. A seat according to Claim 10, **characterised in that** the said second control means are independent of the said first control means, so that the actuation of the second control means does not modify the adjustment obtained by the actuation of the first control means, adapted to the size of the passenger.

12. A seat according to Claim 11, **characterised in that** the back rest (6) is connected at its bottom part to the body of a jack (20) whose rod is fixed in an articulated fashion to the structure (1) of the seat.

13. A seat according to one of Claims 1 to 12, **characterised in that** the control means are manual or motorised.

14. A seat according to one of Claims 1 to 13, **characterised in that** the back rest (6) has a head rest adjustable manually or in a motorised fashion, independently or not of the back rest (6), according to the size of the passengers.

15. A seat according to one of Claims 1 to 14, **characterised in that** it comprises a leg rest (9) adjustable according to the size of the passengers and whose inclination can be adjusted manually or in a motorised fashion.
